# EUROPÄISCHE PATENTSCHRIFT

(11) **EP 2 487 857 B1**
(45) Veröffentlichungstag und Bekanntmachung des Hinweises auf die Patenterteilung: **21.10.2015**
(21) Anmeldenummer: 11001061.8
(22) Anmeldetag: 10.02.2011
(51) Int. Cl.: H04L 29/06

(54) **VERFAHREN ZUR DARBIETUNG EINES SICHEREN INTERNETZUGANGS**
METHOD FOR PROVIDING SECURE INTERNET ACCESS
PROCÉDÉ DE REPRÉSENTATION D'UN ACCÈS INTERNET SÛR

(43) Veröffentlichungstag der Anmeldung: 15.08.2012
(73) Patentinhaber: Deutsche Telekom AG, 53113 Bonn (DE)
(72) Erfinder: Benner, Alexander, 57627 Gehlert (DE)
(74) Vertreter: Kohlhof, Stephan

(56) Entgegenhaltungen:
- US-A1- 2007 180 449

## Beschreibung

Die Anmeldung betrifft ein Verfahren zur Darbietung eines sicheren Internetzugangs über ein Netzwerkportal, insbesondere über ein Internetportal, umfassend die folgenden Verfahrensschritte:
- Bereitstellen einer Schnittstelle zur Anmeldung auf dem Netzwerkportal über ein Endgerät,
- Prüfung der Berechtigung eines Nutzers, der über das Endgerät auf das Netzwerkportal zugreift, und
- Bereitstellen einer Laufzeitumgebung für einen als berechtigt anerkannten Nutzer.

Des Weiteren betrifft die Erfindung ein Netzwerkportal zur Bereitstellung eines sicheren Internetzugangs.

Die Nutzung des Internets ist heutzutage geradezu selbstverständlich geworden. Immer mehr Endgeräte verfügen über eine Netzwerkkonnektivität, die einen Zugriff auf im Internet vorgehaltene Informationen ermöglicht. Aufgrund des einfachen Zugangs und der ständigen Verfügbarkeit ist es für den Nutzer des Internets heute bereits selbstverständlich, dort angebotene Funktionen und Dienste in Anspruch zu nehmen. Dies betrifft in zunehmendem Maße auch sicherheitsrelevante Vorgänge, wie beispielsweise das Online-Banking.

Trotz des verbreiteten Einsatzes von Firewalls und Virenscannern kommt es dabei immer öfter zu erfolgreich verlaufenden Betrugsversuchen. Beim Nutzer sicherheitsrelevanter Funktionen im Internet bleibt deshalb immer öfter ein mulmiges Gefühl zurück, ob denn auch alles korrekt verlaufen ist.

Zudem geht der Trend immer mehr hin zu Verlagerung ganzer Softwarefunktionen in das Internet. Begriffe wie Cloud Computing und Software-as-a-Service prägen immer mehr unseren Alltag. Je mehr dieser Funktionen ins Internet ausgelagert werden, desto größer wird das Bedürfnis nach aktuellen Sicherheitsmechanismen, die den Nutzer zuverlässig schützen. Eine Schutzmöglichkeit ist das Bereitstellen der Softwarefunktionen im Netzwerk innerhalb einer Laufzeitumgebung. Eine solche Laufzeitumgebung ist im Prinzip eine virtuelle Maschine, auf die nur der berechtigte Nutzer zugriff hat.

Das US 2007/180449 A1 zeigt ein Netzwerkportal, das nach positiver Berechtigungsprüfung einem User Zugang zu eine virtuellen Maschine verschafft, über die er auf das Internet zugreifen kann.

Aufgabe der Erfindung ist es nun, ein Verfahren zur Darbietung eines sicheren Netzwerkzugangs vorzuschlagen, das dem Nutzer den Zugriff auf das Internet mit hohem Sicherheitsniveau ermöglicht. Weiter ist es Aufgabe der Erfindung ein eben solches Netzwerkportal zur Bereitstellung eines sicheren Netzwerkzugangs vorzuschlagen.

Diese Aufgaben werden gelöst durch ein Verfahren gemäß Anspruch 1 bzw. ein Netzwerkportal gemäß Anspruch 9 Besonders vorteilhafte Ausführungsformen werden in den Unteransprüchen genannt. Ein wesentlicher Grundgedanke der Entfindung ist es, der Laufzeitumgebung eine Schnittstelle zuzuordnen, über die der berechtigte Nutzer insbesondere anonym Zugriff auf eine im Internet abrufbare Information erhält. Dem Nutzer wird auf diese Weise eine sichere, nach außen hin abgeschirmte Umgebung zur Verfügung gestellt, aus der er ohne großes Risiko auf das Internet zugreifen kann. Dabei kann die dem berechtigten Nutzer zur Verfügung gestellte Laufzeitumgebung in einem lokalen Netzwerk vorgehalten werden. Besonders vorteilhaft ist die deren Anordnung im Internet selbst, da so sämtliche Funktionen zentral vorgehalten werden können.

Der Nutzer des erfindungsgemäßen Verfahrens benötigt lediglich ein beliebiges Endgerät mit Netzwerkfähigkeit, um auf die Schnittstelle zur Anmeldung auf dem Netzwerkportal zugreifen. Nach positiver Prüfung der Berechtigung des Nutzers wird ihm vom Netzwerkportal die Laufzeitumgebung zur Verfügung gestellt. Die Laufzeitumgebung stellt für den Nutzer sozusagen einen virtuellen Computer bereit, in dem Anwendungen laufen, auf die der Nutzer zugreifen kann. Die Laufzeitumgebung funktioniert dabei als eine Art Sandbox. Sie schirmt den Nutzer nach außen hin ab. Einzige Verbindung der Laufzeitumgebung zum Internet ist eine Schnittstelle, über welche sie dem berechtigte Nutzer Zugriff auf eine im Internet Schnittstelle, über welche sie dem berechtigten Nutzer Zugriff auf eine im Internet abrufbare Information gewährt. Die dort nachgefragten Informationsinhalte werden dann über ein in der Laufzeitumgebung ablaufendes Programm angezeigt. Der Anwender greift somit nicht direkt auf das Internet zu, sondern wählt sich an seinem Netzwerkportal ein, und kann nach erfolgreicher Authentifizierung über die zur Verfügung gestellte Sandbox auf das Internet zugreifen. Während dessen kann die in der Sandbox laufende Software ohne großen Aufwand auf einen stets ordnungsgemäßen Ablauf der Programmfunktionen untersucht werden.

Das erfindungsgemäße Netzwerkportal weist ein Anmeldemodul und ein Virtualisierungsmodul auf, wobei das Anmeldemodul eine Schnittstelle aufweist über die sich ein Nutzer als berechtigter Nutzer des Netzwerkportals anmeldet, wobei das Virtualisierungsmodul eine Laufzeitumgebung zum Zugriff auf das Netzwerk bereitstellt, und wobei das Anmeldemodul und das Virtualisierungsmodul derart zusammenwirken, dass eine von dem Anmeldemodul als berechtigt erkannter Nutzer über das Virtualisierungsmodul Zugriff auf eine im Netzwerk abrufbare Information erhält. Das Netzwerkportal ist somit modular aufgebaut, wodurch sich einzelne Funktionen des Portals einfach ergänzen oder ändern lassen.

In einer besonders bevorzugten Ausführungsform stellt das Internetportal dem berechtigten Nutzer einen Anonymisierungsclient bzw. -dienst zur Verfügung, mit dem er "anonym" im Internet surfen kann. Derartige technische Ansätze, wie zum Beispiel das TOR-Projekt, oder Mix-Kaskaden sind heute schon weit verbreitet und können auf einfache Weise in das Verfahren bzw. das Netzwerkportal integriert werden.

Vorzugsweise werden die im Netzwerk abrufbaren Informationen bewertet, so dass bei einem Zugriff auf eine Information im Internet dem berechtigten Nutzer das Ergebnis der Bewertung übermittelt. Die insbesondere dynamisch und damit stets aktuell geführte Klassifikation der Inhalte lässt sich einfach in ein Signal umsetzen, dass dem Nutzer bei Aufruf der Information dargeboten wird. Solche Signale werden heute schon vielfach eingesetzt, beispielsweise als Verschlüsselungszeichen in der einer Browserleiste. Der Nutzer wird dadurch sofort darauf hingewiesen, ob die von ihm abgerufene Information sicher ist, oder ob er besondere Vorsicht walten lassen muss. Die Bewertung kann dabei prinzipiell vom Netzwerk-Portalbetreiber selbst vorgenommen werden. Aufgrund der Fülle an zu bewertenden Internet-Portalen bedient er sich vorzugsweise zumindest in Teilbereichen hierauf spezialisierter externer Dienstleister.

Je nach Sicherheitsbedürfnis des Benutzers können anstelle oder ergänzend zu einer Warnung auch direkte Zugriffs- oder Downloadsperren eingerichtet werden, deren Greifen dem Nutzer dann signalisiert werden. Vorteilhafterweise kann der Nutzer solche Zugriffs- oder Downloadsperren selbst erstellen oder ergänzen, so dass er die reichweite seines Internetzugangs persönlich konfigurieren kann.

In einer besonders bevorzugten Ausführungsform wird zur Bewertung die Gültigkeit von Zertifikaten geprüft, die für die im Netzwerk abrufbare Information ausgestellt wurden. Diese Funktion ist insbesondere beim Online-Banking von Vorteil. Das Netzwerkportal wird zu einer Vertrauensplattform, welche die Zertifikate der Online-Banken überprüft, vorhält und dem Nutzer des Portals zur Verfügung stellt. Der Nutzer kann so stets sicher sein, dass er mit einer realen Online-Bank kommuniziert. Das Netzwerkportal verhindert so zuverlässig alle Phishing-Versuche.

Vorteilhafterweise wird die sichere Netzwerkverbindung zwischen dem berechtigten Nutzer und der im Internet abrufbaren Information mit gültigem Zertifikat über die Laufzeitumgebung hergestellt. Die Sandbox ist dann der die Sicherheit überprüfende Man-in-the-middle, über den eine sichere Verbindung zwischen dem Endgerät des Nutzers und der Sandbox, sowie eine sichere Verbindung zwischen der Sandbox und der im Internet abrufbaren Information, wie z.B. zum Portal einer Online-Bank herstellt. Dabei ist es von Vorteil, das Netzwerkportal selbst von unabhängiger Seite auf Sicherheit überprüfen zu lassen, um die Vertrauenswürdigkeit für den Kunden weiter zu erhöhen. Die Akzeptanz des geprüften Man-in-the-middle kann durch eine Art Versicherung weiter gesteigert werden, die für Fälle, in denen unberechtigte Dritte Zugriff auf Zugangs- oder Transaktionsdaten bekommen, einen Ausgleich bietet.

Wenn das Zertifikat für das angewählte Online-Banking-Portal als gültig erkannt wird, kann auch eine direkte Verbindung zwischen dem Bankportal und dem Endgerät aufgebaut werden, unter Umgehung der Laufzeitumgebung. In einer besonders bevorzugten Ausführungsform werden die Klassifikationen in einer Blacklist und/oder Whitelist zusammengefasst. Beispielsweise werden die Zertifikate von positiv geprüften Online-Banken in einer Whitelist hinterlegt. Die Nutzer können diese Liste nicht nur einsehen, sondern auch Veränderungen in dieser Liste anstoßen, wenn sie weitere Online-Banken zur Aufnahme in die Whitelist melden. Im umgekehrten Fall, also wenn beispielsweise ein Zertifikat zu einer gemeldeten Online-Bank gefälscht ist, beziehungsweise die Online-Bank nicht existent ist, wird dieses Zertifikat der Blacklist hinzugefügt. Von den Nutzern gemachte Vorschläge zur Ergänzung der Listen werden vorteilhafter Weise vor dem Eintrag auf ihre Korrektheit überprüft.

Vorzugsweise erfolgt die Ausführung der Software auf dem Netzwerkportal innerhalb verschiedener Ebenen. Jede dieser Ebenen weist dann ein anderes Sicherheitsniveau auf, so dass je nach Bedarf durch Wahl der Ebene das Sicherheitsniveau erhöht oder erniedrigt werden kann. Dieses Sicherheitsniveau kann für verschiedene Anwendungen voreingestellt sein, aber auch in das Belieben des Nutzers gestellt werden. Eine zusätzliche Sicherheit bietet die Bereitstellung diverser Virenscanner und anderer Sicherheitssoftware, welche die Unbedenklichkeit der im Internet abgerufenen Informationen untersuchen.

In einer bevorzugten Ausführungsform erfolgt die Prüfung der Berechtigung eines Nutzers über die Authentifizierung des zugreifenden Endgerätes, insbesondere über die Überprüfung der MAC-Adresse des zugreifenden Endgeräts. Derartige MAC-Adressen können auf einfache Weise in einer Whitelist gepflegt und hinterlegt werden. Ist das Gerät gemäß dieser Whitelist bekannt, kann es ohne weitere Prüfung, quasi automatisch, auf das Netzwerkportal zugreifen.

Bei unbekannter MAC-Adresse erfolgt die Authentifizierung vorzugsweise mittels der Eingabe eines Passwortes. Der Versand eines solchen Passwortes kann ohne großen Aufwand an eine im Netzwerkportal hinterlegte Adresse eines Endgerätes geschickt werden, beispielsweise per SMS an eine hinterlegte Handynummer. Hierzu muss bei der erstmaligen Nutzung des Netzwerkportals lediglich die Adresse des Endgerätes hinterlegt werden. Vorzugsweise wird die Authentifikation per Einmal-Passwort (OTP) durchgeführt, wodurch der Nutzer nach Anmeldung ein neues eigenes Passwort vergeben muss.

In einer besonders bevorzugten Ausführungsform der Erfindung können auch Dienste von einen lnternetzugriff anbietenden Online-Providern, wie beispielsweise t-online.de in das Netzwerkportal integriert werden. Diese Dienste können dann aus dem Portal heraus für den Nutzer absolut transparent aufgerufen werden. Analog zum normalen Webmail-Dienst können hier dann auch E-Mails empfangen und versandt werden. Zur Eingabe persönlicher, besonders sicherheitsrelevanter Daten, wie beispielsweise der zur Einwahl in den E-Mail Account benötigten Zugangsdaten, kann ein besonders gesicherter Bereich des Netzwerkportals vorgesehen werden, so dass diese Daten bestmöglich gegen Diebstahl geschützt sind.

Vorzugsweise werden auf dem Netzwerkportal verschiedene Funktionen, insbesondere über das Netzwerkportal abrufbare Dienste, zur Personalisierung des Netzwerkportals vorgehalten. Hierunter fällt beispielsweise die Auswahl eines bevorzugten Browsers für das Surfen im Internet, oder die Voreinstellung bestimmter Tools wie zum Beispiel Wetter, Favoriten oder Log-ins. Über das Tool bzw. die Funktion "Wetter" kann beispielsweise das aktuelle Wetter und gegebenenfalls eine Vorhersage für einen vom Nutzer festgelegten Ort automatisch angezeigt werden. In den Favoriten sind vom Nutzer häufig aufgerufene Funktionen hinterlegt. Im Tool "Log-in" kann der Nutzer Zugangsdaten von Zugängen mit einer niedrigen Sicherheitsstufe hinterlegen, z.B. zu Foren oder zu Newsgroups wie auch Social-Media-Anwendungen.

Das derart personalisierte Portal stellt auch sicher, dass es nicht zu Phishing-Attacken kommt, da eine direkt Verbindung Portal - Onlinebank beim Online-Banking aufgebaut wird und anhand des Zertifikates die Authentisierung der Bank erfolgt, ist Phishing nicht möglich. In einer weiteren vorteilhaften Ausführungsform erhält der Nutzer bei jeder Anmeldung am Portal ein Info darüber wann er sich zuletzt angemeldet hatte und (und ggf. wann und in welchem Umfang) erfolglos versucht wurde sich für das Portal anzumelden.

## Patentansprüche

1. Verfahren zur Darbietung eines sicheren Internetzugangs über ein Netzwerkportal, insbesondere ein Internetportal, umfassend die folgenden Verfahrensschritte:
Bereitstellen einer Schnittstelle zur Anmeldung auf dem Netzwerkportal über ein Endgerät,
Prüfung der Berechtigung eines Nutzers, der über das Endgerät auf das Netzwerkportal zugreift, und
Bereitstellen einer Laufzeitumgebung für einen als berechtigt erkannten Nutzer,
wobei der Laufzeitumgebung eine Schnittstelle zugeordnet wird, über die der berechtigte Nutzer Zugriff auf eine im Internet abrufbare Information erhält,
**dadurch gekennzeichnet,**
**dass** die im Internet abrufbaren Informationen bewertet werden und das bei einem Zugriff auf eine Information im Internet dem berechtigten Nutzer ein Signal über die Klassifikation der im Internet abrufbaren Information dargeboten wird.

2. Verfahren nach Anspruch 1,
**dadurch gekennzeichnet,**
**dass** zur Bewertung die Gültigkeit von Zertifikaten geprüft wird, die für die im Netzwerk abrufbare Informationen ausgestellt wurden.

3. Verfahren nach Anspruch 2,
**dadurch gekennzeichnet,**
**dass** über die Laufzeitumgebung eine sichere Netzwerkverbindung zwischen dem berechtigten Nutzer und der im Netzwerk abrufbare Informationen mit gültigem Zertifikat hergestellt wird.

4. Verfahren nach einem der Ansprüche 1 - 3,
**dadurch gekennzeichnet,**
**dass** die Klassifikationen in einer Blacklist und/oder Whitelist zusammengefasst werden.

5. Verfahren nach einem der vorangegangenen Ansprüche,
**dadurch gekennzeichnet,**
**dass** bei Prüfung der Berechtigung eines Nutzers eine Authentifizierung des zugreifenden Endgeräts, insbesonder eine Überprüfung der Mac-Adresse des zugreifenden Endgeräts, erfolgt.

6. Verfahren nach Anspruch 5,
**dadurch gekennzeichnet,**
**dass** bei unbekannter Mac-Adresse die Authentifizierung mittels der Eingabe eines Passworts, insbesondere der Eingabe eines an ein vorbestimmtes Endgerät versandten Einmalpassworts, erfolgt.

7. Verfahren nach einem der vorangegangenen Ansprüche,
**dadurch gekennzeichnet,**
**dass** auf dem Netzwerkportal verschiedenen Funktionen, insbesondere über das Netzwerkportal abrufbare Dienste, zur Personalisierung des Netzwerkportals vorgehalten werden.

8. Verfahren nach einem der vorangegangenen Ansprüche,
**dadurch gekennzeichnet,**
**dass** auf dem Netzwerkportal eine Anonymisierungsfunktion vorgehalten wird, mittels welcher der berechtigte Nutzer anonym auf das Netzwerk zugreifen kann.

9. Netzwerkportal zur Durchführung eines Verfahrens nach einem der Ansprüche 1 bis 8, wobei das Netzwerkportal ein Anmeldemodul und ein Virtualisierungsmodul umfasst, wobei das Anmeldemodul eine Schnittstelle aufweist, über die sich ein Nutzer als berechtigter Nutzer des Netzwerkportals anmeldet, wobei das Virtualisierungsmodul eine Laufzeitumgebung zum Zugriff auf das Netzwerk bereitstellt, und wobei das Anmeldemodul und das Virtualisierungsmodul derart zusammenwirken, dass ein von dem Anmeldemodul als berechtigt erkannter Nutzer über das Virtualisierungsmodul Zugriff auf eine im Internet abrufbare Information erhält.

## Claims

1. A method for offering secure internet access via a network portal, in particular an internet portal comprising the following method steps:
providing an interface for logging in at the network portal via a terminal,
checking the authorisation of a user accessing the network portal via the terminal, and
providing a runtime environment for a user recognised as being authorised,
wherein the runtime environment has an interface assigned to it, via which the authorised user obtains access to an information retrievable from the internet,
**characterised in that** the information retrievable from the internet are evaluated and **in that** when an information is accessed in the internet the authorised user is presented with a signal regarding the classification of the information retrievable from the internet.

2. The method according to claim 1, **characterised in that** for the purpose of evaluation, the validity of certificates issued for the information retrievable from the internet is checked.

3. The method according to claim 2, **characterised in that** a secure network connection is established via the runtime environment between the authorised user and the information retrievable from the internet, which has a valid certificate.

4. The method according to one of claims 1 to 3, **characterised in that** the classifications are summarised in a blacklist and/or a whitelist.

5. The method according to one of the preceding claims, **characterised in that** when checking the authorisation of a user, an authentication of the accessing terminal, in particular a check of the MAC address of the accessing terminal is carried out.

6. The method according to claim 5, **characterised in that** if the MAC address is unknown, authentication is carried out by means of entering a password, in particular by entering a onetime password sent to a predefined terminal.

7. The method according to one of the preceding claims, **characterised in that** various functions, in particular services retrievable via the network portal, are held ready on the network portal for personalising the network portal.

8. The method according to one of the preceding claims, **characterised in that** an anonymising function is held ready on the network portal, by means of which the authorised user can access the network anonymously.

9. A network portal for carrying out a method according to one of claims 1 to 8, wherein the network portal comprises a log-in module and a virtualising module, wherein the log-in module comprises an interface, via which a user logs in as an authorised user of the network portal, wherein the virtualising module provides a runtime environment for accessing the network, and wherein the log-in module and the virtualising module interact with each other such that a user recognised as being authorised by the log-in module obtains access via the virtualising module to an information retrievable from the internet.

## Revendications

1. Procédé pour offrir un accès sûr à Internet via un portail de réseau, en particulier un portail Internet, comprenant les étapes suivantes du procédé :
la mise à disposition d'une interface pour une demande de connexion au portail de réseau via un poste terminal,
le contrôle de l'autorisation d'un utilisateur, lequel accède au portail de réseau via le poste terminal, et
la mise à disposition d'un environnement d'exécution pour un utilisateur reconnu comme étant autorisé,
dans lequel une interface est associée à l'environnement d'exécution, par l'intermédiaire de laquelle l'utilisateur autorisé obtient un accès à une information pouvant être interrogée sur Internet,
**caractérisé en ce que**
les informations pouvant être interrogées sur Internet sont évaluées et **en ce qu'**en cas d'un accès à une information sur Internet, l'utilisateur autorisé se voit offrir un signal sur la classification de l'information pouvant être interrogée sur Internet.

2. Procédé selon la revendication 1, **caractérisé en ce que**, pour l'évaluation, on contrôle la validité de certificats qui ont été délivrés pour les informations pouvant être interrogées sur le réseau.

3. Procédé selon la revendication 2, **caractérisé en ce qu'**une connexion réseau sûre entre l'utilisateur autorisé et les informations avec un certificat valide pouvant être interrogées sur le réseau est établie via l'environnement d'exécution.

4. Procédé selon l'une des revendications 1-3, **caractérisé en ce que** les classifications sont rassemblées dans une liste noire et/ou une liste blanche.

5. Procédé selon l'une des revendications précédentes, **caractérisé en ce que**, lors du contrôle de l'autorisation d'un utilisateur, il s'en suit une authentification du poste terminal ayant accès, en particulier un contrôle de l'adresse Mac du poste terminal ayant accès.

6. Procédé selon la revendication 5, **caractérisé en ce que**, en cas d'adresse Mac inconnue, l'authentification s'effectue au moyen de la saisie d'un mot de passe, en particulier de la saisie d'un mot de passe à usage unique envoyé à un poste terminal prédéterminé.

7. Procédé selon l'une des revendications précédentes, **caractérisé en ce que** différentes fonctions sont mises à disposition sur le portail de réseau, en particulier des services pouvant être appelés via le portail de réseau pour la personnalisation du portail de réseau.

8. Procédé selon l'une des revendications précédentes, **caractérisé en ce qu'**une fonction d'anonymisation est mise à disposition sur le portail de réseau, à l'aide de laquelle l'utilisateur autorisé peut accéder anonymement au réseau.

9. Portail de réseau pour l'exécution d'un procédé selon l'une des revendications 1 à 8, dans lequel le portail de réseau comprend un module d'enregistrement et un module de virtualisation, dans lequel le module d'enregistrement présente une interface via laquelle un utilisateur s'enregistre en tant qu'utilisateur autorisé du portail de réseau, dans lequel le module de virtualisation met à disposition un environnement d'exécution pour l'accès au réseau, et dans lequel le module d'enregistrement et le module de virtualisation coopèrent d'une manière telle, qu'un utilisateur reconnu comme étant autorisé par le module d'enregistrement obtient un accès à une information pouvant être interrogée sur Internet via le module de virtualisation.
